# EUROPEAN PATENT APPLICATION

(11) **EP 4 697 124 A1**
(43) Date of publication of application: **18.02.2026**
(21) Application number: 25162968.9
(22) Date of filing: 11.03.2025
(51) Int. Cl.: G05D 1/86

(54) **METHOD AND SYSTEM FOR OFFBOARD DATA VALIDATION VIA SYNCED MIRROR FLIGHT MANAGEMENT SYSTEM**

(30) Priority: 04.04.2024 IN 202411027920; 09.08.2024 US 202418798999
(71) Applicant: Honeywell International Inc., Charlotte, NC 28202 (US)
(72) Inventor: TOEWS, Philip, Charlotte, 28202 (US); LIU, Wen Hua, Charlotte, 28202 (US); SHAMASUNDAR, Raghu, Charlotte, 28202 (US); SELVARAJAN, Ravikumar, Charlotte, 28202 (US); BATELKA, Marek, Charlotte, 28202 (US); TRUPHEME, Marc-Antoine, Charlotte, 28202 (US)
(74) Representative: Ingrassia, Fisher & Lorenz UK Ltd.

(57) **Abstract**

A method and system for validating data for a Flight Management System (FMS) onboard an aircraft has been developed. Incoming data is received with a primary FMS located onboard the aircraft while the incoming data is simultaneously received with a mirror FMS that is identical to the primary FMS. The current parameters and conditions of the primary FMS are automatically transmitted to the mirror FMS. Next, the incoming data is processed with both the primary FMS and the mirror FMS. The results of the processed data of the primary FMS are then validated with the results of the processed data of the mirror FMS.

## Description

### CROSS REFERENCE TO RELATED APPLICATION

This application claims priority to India Provisional Patent Application No. 202411027920, filed April 4, 2024, the entire content of which is incorporated by reference herein.

### TECHNICAL FIELD

The present invention generally relates to avionics flight management, and more particularly relates to a method and system for offboard data validation via synced mirror Flight Management System (FMS).

### BACKGROUND

A Flight Management System (FMS) and a mirror FMS are commonly used within the flight management of aircraft. The mirror FMS is identical to the FMS but are disconnected from each other. However, they have the same features and are built from the same software baseline. Since the mirror FMS and FMS are identical, if any processing is successful within the mirror FMS, there is high confidence the FMS will not be corrupted or exposed to an input resulting in a fault within the FMS during its processing. In order to accurately perform the correct validation of an input within the mirror FMS, the mirror FMS must also share the same starting conditions as the FMS. Since the FMS and mirror FMS are disconnected, the validation of the input on the mirror FMS is only as good as its initial data that was provided by the user. For example, if the aircraft is in flight, the mirror FMS must have access to all of the in-flight data available to the FMS, including such things as current aircraft conditions, current flight plan within the FMS, etc.

Hence, there is a need for a method and system for offboard data validation via synced mirror FMS.

### BRIEF SUMMARY

This summary is provided to describe select concepts in a simplified form that are further described in the Detailed Description. This summary is not intended to identify key or essential features of the claimed subject matter, nor is it intended to be used as an aid in determining the scope of the claimed subject matter.

A method is provided for validating data for a Flight Management System (FMS) onboard an aircraft. The method comprises: receiving a first instance incoming data with a primary FMS located onboard the aircraft; receiving a second instance incoming data simultaneously with a mirror FMS that is identical to the primary FMS, where the primary FMS and the mirror FMS are not connected; automatically transmitting the current parameters and conditions of the primary FMS to the mirror FMS; processing the first instance of incoming data with the primary FMS; processing the second instance of incoming data with the mirror FMS; and validating results of the processed data of the primary FMS with the results of the processed data of the mirror FMS.

A system is provided for validating data for a Flight Management System (FMS) onboard an aircraft. The system comprises: a primary FMS, comprising, a primary memory element, a primary communication device, configured to receive a first instance of the incoming data at the particular time, a primary processor, communicatively coupled to the primary memory element and the primary communication device, the primary processor configured to process the first instance of the incoming data, when the output comprises acceptable results; a mirror FMS, comprising, a mirror memory element, a mirror display device, configured to simulate a primary display device, a mirror communication device, configured to receive a second instance of incoming data at a particular time, a mirror processor, communicatively coupled to the mirror memory element, the mirror display device, and the mirror communication device, the mirror processor configured to process a first instance of the incoming data, when received via the mirror communication device, and present output via the mirror display device, based on processing the second instance of the incoming data, where the output comprises either acceptable results or unacceptable results; and where the current parameters and conditions of the primary FMS are automatically transmitted by the primary FMS to the mirror FMS prior to processing the second instance of incoming data by the mirror FMS.

Furthermore, other desirable features and characteristics of the disclosed embodiments will become apparent from the subsequent detailed description and the appended claims, taken in conjunction with the accompanying drawings and the preceding background.

### BRIEF DESCRIPTION OF DRAWINGS

The present disclosure will hereinafter be described in conjunction with the following drawing figures, wherein like numerals denote like elements, and wherein:
FIG. 1 is a diagram of a system for validating incoming data, in accordance with the disclosed embodiments;
FIG. 2 is a functional block diagram of a primary computer system, in accordance with the disclosed embodiments;
FIG. 3 is a functional block diagram of a mirror computer system, in accordance with the disclosed embodiments;
FIG. 4 is a functional block diagram of a computing device that provides incoming data for validation, in accordance with the disclosed embodiments; and
FIG. 5 is a flowchart of a method for offboard data validation via synced mirror flight management system (FMS), in accordance with the disclosed embodiments.

### DETAILED DESCRIPTION

The following detailed description is merely exemplary in nature and is not intended to limit the invention or the application and uses of the invention. As used herein, the word "exemplary" means "serving as an example, instance, or illustration." Thus, any embodiment described herein as "exemplary" is not necessarily to be construed as preferred or advantageous over other embodiments. All of the embodiments described herein are exemplary embodiments provided to enable persons skilled in the art to make or use the invention and not to limit the scope of the invention which is defined by the claims. Furthermore, there is no intention to be bound by any expressed or implied theory presented in the preceding technical field, background, brief summary, or the following detailed description.

A method and system for validating data for a Flight Management System (FMS) onboard an aircraft has been developed. Incoming data is received with a primary FMS located onboard the aircraft while the incoming data is simultaneously received with a mirror FMS that is identical to the primary FMS. The current parameters and conditions of the primary FMS are automatically transmitted to the mirror FMS. Next, the incoming data is processed with both the primary FMS and the mirror FMS. The results of the processed data of the primary FMS are then validated with the results of the processed data of the mirror FMS.

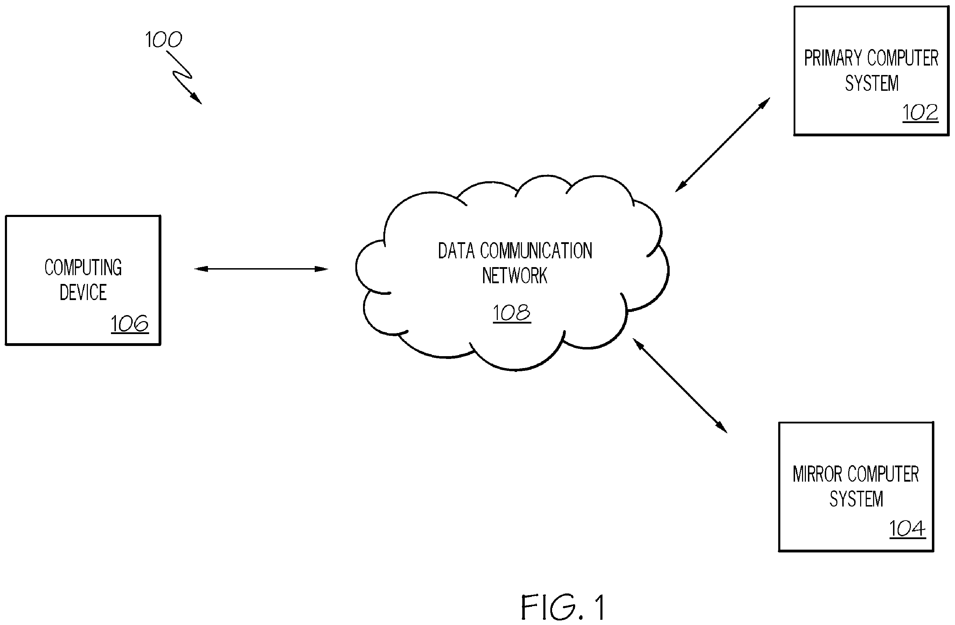

Turning now to the figures, FIG. 1 is a diagram of a system 100 for validating incoming data, in accordance with the disclosed embodiments. The system 100 operates to validate data transmitted to a primary computer system 102, prior to incorporation and use by the primary computer system 102. The system 100 may include, without limitation, a computing device 106 that communicates with the primary computer system 102 and a mirror computer system 104, via a data communication network 108. In practice, certain embodiments of the system 100 may include additional or alternative elements and components, as desired for the particular application.

The computing device 106 may be implemented by any computing device that includes at least one processor, some form of memory hardware, a user interface, and communication hardware. For example, the computing device 106 may be implemented using a personal computing device, such as a tablet computer, a laptop computer, a personal digital assistant (PDA), a smartphone, or the like. In certain embodiments, the system 100 is implemented onboard a vehicle, which may be implemented as any one of a number of different types of types of automobiles (sedans, wagons, trucks, motorcycles, sport-utility vehicles, vans, etc.), aviation vehicles (such as airplanes, helicopters, etc.), watercraft (boats, ships, jet skis, etc.), trains, all-terrain vehicles (snowmobiles, four-wheelers, etc.), military vehicles (Humvees, tanks, trucks, etc.), rescue vehicles (fire engines, ladder trucks, police cars, emergency medical services trucks and ambulances, etc.), spacecraft, hovercraft, and the like. In this scenario, the computing device 106 is configured to process and transmit data applicable to the particular vehicle for which the computing device 106 processes data. For example, the computing device 106 is capable of storing, maintaining, and executing an Electronic Flight Bag (EFB) application that processes data applicable to aviation applications. As another example, the computing device 106 may be implemented using an integrated computer system onboard an aircraft, which is configured to process data applicable to one or more systems of the particular aircraft.

In other embodiments, the computing device 106 may be implemented as any computer communicatively coupled to, and using a communication protocol compatible with, the primary computer system 102 and the mirror computer system 104. The computing device 106 communicates with the primary computer system 102 and the mirror computer system 104 using one or more wired and/or wireless communication connections via the data communication network 108. The computing device 106 may be located in close proximity to the primary computer system 102 and the mirror computer system 104, or the computing device 106 and the primary computer system 102 and the mirror computer system 104 may be disparately located.

The data communication network 108 may be any digital or other communications network capable of transmitting messages or data between devices, systems, or components. In certain embodiments, the data communication network 108 includes a packet switched network that facilitates packet-based data communication, addressing, and data routing. The packet switched network could be, for example, a wide area network, the Internet, or the like. In various embodiments, the data communication network 108 includes any number of public or private data connections, links or network connections supporting any number of communications protocols. The data communication network 108 may include the Internet, for example, or any other network based upon TCP/IP or other conventional protocols. In various embodiments, the data communication network 108 could also incorporate a wireless and/or wired telephone network, such as a cellular communications network for communicating with mobile phones, personal digital assistants, and/or the like. The data communication network 108 may also incorporate any sort of wireless or wired local and/or personal area networks, such as one or more IEEE 802.3, IEEE 802.16, and/or IEEE 802.11 networks, and/or networks that implement a short range (e.g., Bluetooth) protocol. For the sake of brevity, conventional techniques related to data transmission, signaling, network control, and other functional aspects of the systems (and the individual operating components of the systems) may not be described in detail herein.

The computing device 106 has stored, received, generated, or otherwise obtained a set of data associated with one or more applications of the primary computer system 102. Here, the set of data is external to the primary computer system 102 and is required by the primary computer system 102 to perform functionality of the one or more associated applications. However, because the set of data is external to the primary computer system 102, the external set of data may or may not be uncorrupted and safe to import into the primary computer system 102. Thus, the external set of data must be validated before use by the primary computer system 102.

During typical operation, the computing device 106 simultaneously transmits the set of data to the primary computer system 102 and the mirror computer system 104. The primary computer system 102 retains the set of data in a data buffer, and the mirror computer system 104 acts as a simulated version of the primary computer system 102 by executing a duplicate of a software application associated with functionality of the primary computer system 102 and using the received set of external data to perform the functionality of the primary computer system 102. The mirror computer system 104 produces an output result that is presented to a user via a display device configured to simulate a display of the primary computer system 102, such that a user may evaluate the output result and determine whether the output is appropriate, indicating that the set of external data is uncorrupted and safe to import into the primary computer system 102 for use. When the user provides a user input selection to the primary computer system 102, wherein the selection indicates that the set of external data is safe for use, then the primary computer system 102 extracts the set of external data from the data buffer, imports the set of external data, and performs functionality using the set of external data.

Exemplary embodiments of the invention may be used for aviation applications onboard an aircraft. For example, the primary computer system 102 may be implemented as a Flight Management System (FMS) or other avionics device requiring certification to verify the integrity of the any imported data. In this example, the mirror computer system 104 may be implemented as any computer system or avionics device onboard the aircraft that lacks a communication connection to the primary computer system 102 (e.g., the FMS). Thus, the primary computer system 102 and the mirror computer system 104 are separate and distinct computing entities, and the primary computer system 102 is unable to receive the set of external data (or any other data) from the mirror computer system 104. In this example, the set of external data may be received from a personal computing device executing an Electronic Flight Bag (EFB) application, from a ground control computer system, or from any other computer system with a hardwired or wireless communication connection to the primary computer system 102 and the mirror computer system 104, wherein a first communication connection from the computing device 106 to the primary computer system 102 is separate and distinct from a second communication connection from the computing device 106 to the mirror computer system 104.

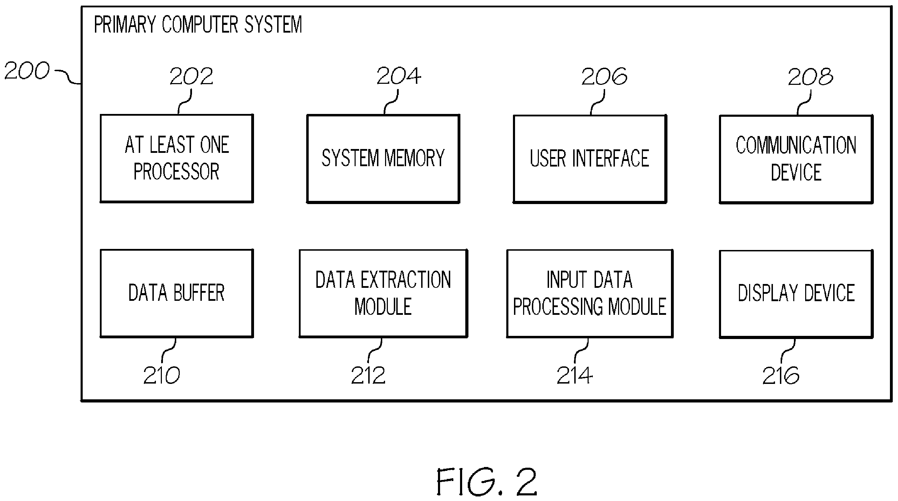

FIG. 2 is a functional block diagram of a primary computer system 200, in accordance with the disclosed embodiments. It should be noted that the primary computer system 200 can be implemented with the primary computer system 102 depicted in FIG. 1. In this regard, the primary computer system 200 shows certain elements and components of the primary computer system 102 in more detail.

The primary computer system 200 generally includes, without limitation: at least one processor 202; system memory 204; a user interface 206; a communication device 208; a data buffer 210; a data extraction module 212; an input data processing module 214; and a display device 216. These elements and features of the primary computer system 200 may be operatively associated with one another, coupled to one another, or otherwise configured to cooperate with one another as needed to support the desired functionality, as described herein. For ease of illustration and clarity, the various physical, electrical, and logical couplings and interconnections for these elements and features are not depicted in FIG. 2. Moreover, it should be appreciated that embodiments of the primary computer system 200 will include other elements, modules, and features that cooperate to support the desired functionality. For simplicity, FIG. 2 only depicts certain elements that relate to the techniques described in more detail below.

The at least one processor 202 may be implemented or performed with one or more general purpose processors, a content addressable memory, a digital signal processor, an application specific integrated circuit, a field programmable gate array, any suitable programmable logic device, discrete gate or transistor logic, discrete hardware components, or any combination designed to perform the functions described here. In particular, the at least one processor 202 may be realized as one or more microprocessors, controllers, microcontrollers, or state machines. Moreover, the at least one processor 202 may be implemented as a combination of computing devices, e.g., a combination of digital signal processors and microprocessors, a plurality of microprocessors, one or more microprocessors in conjunction with a digital signal processor core, or any other such configuration.

The at least one processor 202 is communicatively coupled to the system memory 204. The system memory 204 is configured to store any obtained or generated data associated with functionality of the primary computer system 200, and graphical elements associated with the primary computer system 200. The system memory 204 may be realized using any number of devices, components, or modules, as appropriate to the embodiment. Moreover, the primary computer system 200 could include system memory 204 integrated therein and/or a system memory 204 operatively coupled thereto, as appropriate to the particular embodiment. In practice, the system memory 204 could be realized as RAM memory, flash memory, EPROM memory, EEPROM memory, registers, a hard disk, a removable disk, or any other form of storage medium known in the art. In certain embodiments, the system memory 204 includes a hard disk, which may also be used to support functions of the primary computer system 200. The system memory 204 can be coupled to the at least one processor 202 such that the at least one processor 202 can read information from, and write information to, the system memory 204. In the alternative, the system memory 204 may be integral to the at least one processor 202. As an example, the at least one processor 202 and the system memory 204 may reside in a suitably designed application-specific integrated circuit (ASIC).

The user interface 206 may include or cooperate with various features to allow a user to interact with the primary computer system 200. Accordingly, the user interface 206 may include various human-to-machine interfaces, e.g., a keypad, keys, a keyboard, buttons, switches, knobs, a touchpad, a joystick, a pointing device, a virtual writing tablet, a touch screen, a microphone, or any device, component, or function that enables the user to select options, input information, or otherwise control the operation of the primary computer system 200. For example, the user interface 206 could be manipulated by an operator to provide a user input indication that an output result presented by a mirror computer system (external to the primary computer system 200) is either correct or incorrect, expected or unexpected, acceptable or unacceptable, and thus the primary computer system 200 should or should not import and use a set of data received by the communication device 208 and stored in the data buffer 210, as described herein.

In certain embodiments, the user interface 206 may include or cooperate with various features to allow a user to interact with the primary computer system 200 via graphical elements rendered on a display element (e.g., the display device 216). Accordingly, the user interface 206 may initiate the creation, maintenance, and presentation of a graphical user interface (GUI). In certain embodiments, the display device 216 implements touch-sensitive technology for purposes of interacting with the GUI. Thus, a user can manipulate the GUI by moving a cursor symbol rendered on the display device 216, or by physically interacting with the display device 216 itself for recognition and interpretation, via the user interface 206.

The communication device 208 is suitably configured to communicate data between the primary computer system 200 and one or more external computing devices or computer systems (e.g., reference 106, FIG. 1). The communication device 208 may transmit and receive communications over a wireless local area network (WLAN), the Internet, a satellite uplink/downlink, a cellular network, a broadband network, a wide area network, or the like. As described in more detail below, data received by the communication device 208 may include, without limitation: a set of data from an external source, indications that a received set of external data is approved or not approved for import and use during execution of functionality associated with the primary computer system 200, and other data compatible with the primary computer system 200. Data provided by the primary computer system 200 may include, without limitation, an acknowledgment that a set of data from an external source has been received, results generated by the execution of functionality associated with the primary computer system 200 using the set of data from an external source, and the like.

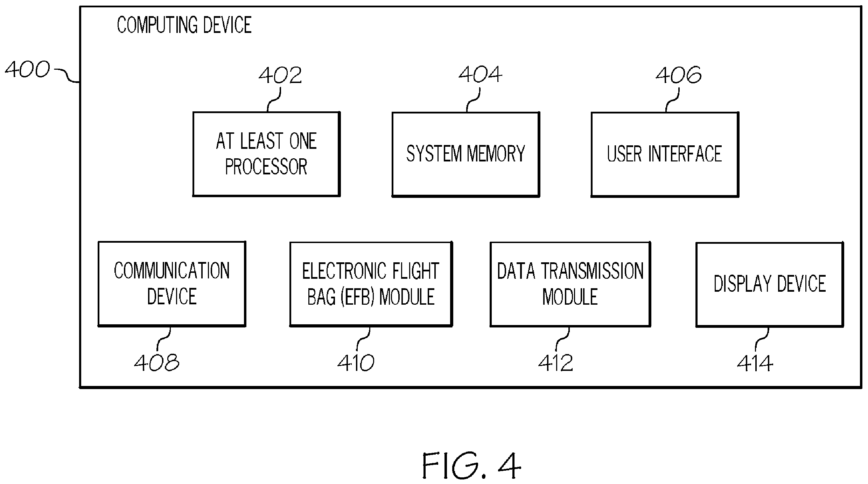

The data buffer is configured to receive a set of data from an external source (e.g., reference 106, FIG. 1; reference 400, FIG. 4), and to retain or hold the set of data until it is determined that the data is uncorrupted and safe to import for use by the primary computer system 102. The data buffer 210 is a region of a physical memory storage used to temporarily store a set of data received from a source external to the primary computer system 200. The data buffer 210 may be implemented in a fixed memory location in hardware, by using a virtual data buffer in software that points to a location in the physical memory, or the like.

The data extraction module 212 is configured to extract a set of data from the data buffer 210, wherein the set of data has been received from an external source and retained in the data buffer 210 pending authorization to use the data by the primary computer system 200. In some embodiments, the primary computer system 200 receives a user input selection to release the set of external data from the data buffer 210 and, in response, the data extraction module 212 removes the set of data from the data buffer 210 for use by the primary computer system 200. However, in other embodiments, the data extraction module 212 may receive other indications that the set of data is authorized for use, which may include voice commands, user gestures, or the like.

The input data processing module 214 is configured to process a set of data that has been extracted from the data buffer 210 (by the data extraction module 212) to perform functionality associated with the primary computer system 200. For example, the extracted set of data may include user input parameters, commands, selections, or data entry values applicable to a particular application of the primary computer system 200. In this case, the input data processing module 214 provides the commands, selections, or data entry values to the particular application to produce user-requested results and/or to perform a user-requested operation. In certain embodiments, the primary computer system 200 is implemented as an avionics device onboard an aircraft, such as a Flight Management System (FMS). In this case, the input data processing module 214 uses a set of user input FMS parameters, such as that provided via an Electronic Flight Bag (EFB) application, to provide takeoff and landing data (i.e., TOLD data), vertically optimized flight plan to be flown by the FMS, or optimized speeds to be used by the FMS.

In practice, the data buffer 210, the data extraction module 212, and/or the input data processing module 214 may be implemented with (or cooperate with) the at least one processor 202 to perform at least some of the functions and operations described in more detail herein. In this regard, the data buffer 210, the data extraction module 212, and/or the input data processing module 214 may be realized as suitably written processing logic, application program code, or the like.

The display device 216 is configured to display various icons, text, and/or graphical elements associated with receiving user input approval or disapproval of the import and use of a set of data received via the communication device 208 and stored in the data buffer 210, the functionality of the primary computer system 200, or the like. In an exemplary embodiment, the display device 216 and the user interface 206 are communicatively coupled to the at least one processor 202. The at least one processor 202, the user interface 206, and the display device 216 are cooperatively configured to display, render, or otherwise convey one or more graphical representations or images associated with the primary computer system 200 on the display device 216, as described in greater detail below. In an exemplary embodiment, the display device 216 is realized as an electronic display configured to graphically display primary computer system 200 data, as described herein. In some embodiments, the primary computer system 200 is an integrated computer system onboard an aircraft, and the display device 216 is located within a cockpit of the aircraft, and is thus implemented as an aircraft display. In other embodiments, the display device 216 is implemented as a display screen of a standalone, personal computing device (e.g., laptop computer, tablet computer). It will be appreciated that although the display device 216 may be implemented using a single display, certain embodiments may use additional displays (i.e., a plurality of displays) to accomplish the functionality of the display device 216 described herein.

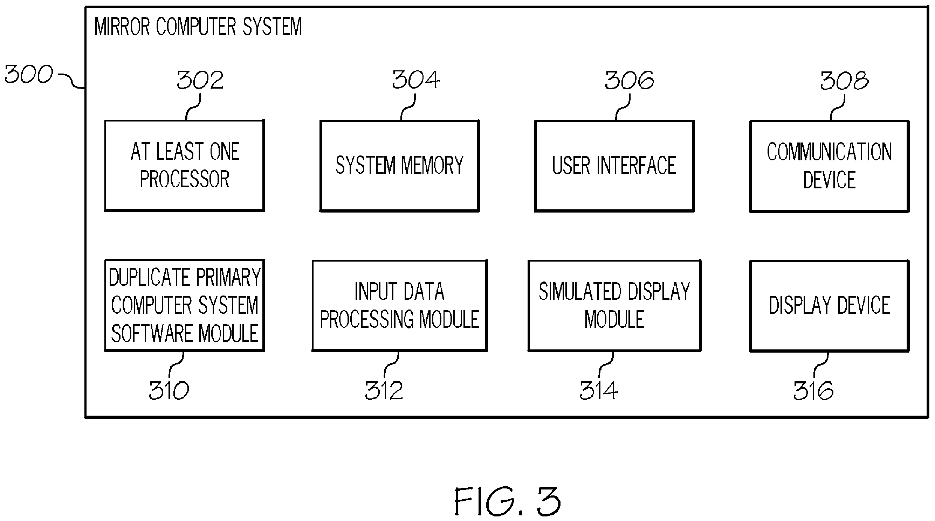

FIG. 3 is a functional block diagram of a mirror computer system 300, in accordance with the disclosed embodiments. It should be noted that the mirror computer system 300 can be implemented with the mirror computer system 104 depicted in FIG. 1. In this regard, the mirror computer system 300 shows certain elements and components of the mirror computer system 104 in more detail. As described previously with regard to FIG. 1, The mirror computer system 300 is operable to receive an instance of a set of data that is identical to a second instance of the same set of data received by the primary computer system (not shown), to process the data using a duplicate of software that is normally stored, maintained, and executed by the primary computer system, and produces an output result indicative of whether or not the set of data is uncorrupted and safe for use by the primary computer system.

The mirror computer system 300 generally includes, without limitation: at least one processor 302; system memory 304; a user interface 306; a communication device 308; a duplicate primary computer system software module 310; an input data processing module 312; a simulated display module 314; and a display device 316. The at least one processor 302, the system memory 304, the user interface 306, the communication device 308, and the display device 316 are similar in configuration and function to their counterpart items described above in the context of the primary computer system 200. Accordingly, common features and operations of these elements of the mirror computer system 300 will not be redundantly described here.

The duplicate primary computer system software module 310 is configured to store (via the system memory 304), maintain, and execute a duplicate of software associated with the primary computer system (not shown). The duplicate primary computer system software module 310 is thus configured to simulate operation of the primary computer system through execution of the duplicate and to create a "mirror" of the primary computer system which may be used to test and verify the integrity of a set of input data received from an external source without compromising the primary computer system.

The input data processing module 312 is configured to use the set of data received from an external source during the simulated operation of the primary computer system (via the duplicate primary computer system software module 310). More specifically, the input data processing module 312 processes the set of data, using the set of data as one or more input parameters to the duplicate of the primary computer system software, to produce one or more output results. In this way, the input data processing module 312 functions to test the integrity of the set of data using the mirror computer system 300 that is separate and distinct from the primary computer system, such that the primary computer system will not become corrupted when the set of incoming data is corrupted. In the case of a corrupt set of incoming data, first executing the duplicate software by the mirror computer system 300 protects the primary computer system by allowing the corrupt set of incoming data to be used by the mirror computer system 300 and the corrupt output results to be presented by the simulated display module 314 (via the display device 316).

The simulated display module 314 is configured to replicate a display, graphical user interface, or other presentation normally associated with the primary computer system, and to present output results generated by processing a set of input data using the duplicate of the software application associated with the primary computer system. The simulated display module 314 operates cooperatively with the user interface 306 and the display device 316 to present a set of output results generated by the input data processing module 312 and, in some embodiments, to receive user input indications that the output results are approved or not approved for further use.

In practice, the duplicate primary computer system software module 310, the input data processing module 312, and/or the simulated display module 314 may be implemented with (or cooperate with) the at least one processor 302 to perform at least some of the functions and operations described in more detail herein. In this regard, the duplicate primary computer system software module 310, the input data processing module 312, and/or the simulated display module 314 may be realized as suitably written processing logic, application program code, or the like.

FIG. 4 is a functional block diagram of a computing device 400 that provides incoming data for validation, in accordance with the disclosed embodiments. It should be noted that the computing device 400 can be implemented with the computing device 106 depicted in FIG. 1. In this regard, the computing device 400 shows certain elements and components of the computing device 106 in more detail. As described previously with regard to FIG. 1, the computing device 400 is operable to transmit a set of data to a primary computer system and a mirror computer system, simultaneously, such that the mirror computer system can test and verify the set of data before the primary computer system imports and uses the set of data. As described previously, the computing device 400 may be implemented as a personal computing device, a ground control computer system, or any other computer capable of communicating with the primary computer system and the mirror computer system. However, FIG. 4 illustrates one exemplary embodiment of the computing device 400 implemented by a personal computing device configured to perform functionality associated with aviation applications onboard an aircraft.

The computing device 400 generally includes, without limitation: at least one processor 402; system memory 404; a user interface 406; a communication device 408; an Electronic Flight Bag (EFB) module 410; a data transmission module 412; and a display device 414. The at least one processor 402, the system memory 404, the user interface 406, the communication device 408, and the display device 414 are similar in configuration and function to their counterpart items described above in the context of the primary computer system 200. Accordingly, common features and operations of these elements of the computing device 400 will not be redundantly described here.

The Electronic Flight Bag (EFB) module 410 is configured to store, maintain, and execute one or more EFB applications for use by the computing device 400. In the exemplary embodiment described herein, the EFB module 410 may be used to perform aviation tasks associated with integrated avionics systems onboard an aircraft. The EFB module 410 may execute an EFB application to establish communication connections to the aircraft onboard avionics systems and to cooperatively perform aviation tasks using the established communication connections. The EFB module 410 is further configured to present graphical elements and text associated with the EFB application, receive user input selections, commands, and data entry associated with the EFB application, and generate data associated with the EFB application.

The data transmission module 412 is configured to transmit a set of data, via the communication device 408, to a primary computer system and a mirror computer system, wherein the set of data is generated by the EFB module 410. Generally, the data transmission module 412 transmits a first instance of the set of data and a second instance of the set of data to both of the destination locations (e.g., the primary computer system and the mirror computer system) simultaneously, via the communication device 408. By transmitting the first and second instances of the set of data simultaneously, the data transmission module 412 ensures that the primary computer system and the mirror computer system receive identical sets of data such that the testing performed by the mirror computer system is accurate and reliable when verifying the uncorrupted and safe state of the set of data. Alternatively, the data transmission module 412 may transmit (e.g., broadcast) a single set of data that is received by both the primary computer system and the mirror computer system.

In practice, the EFB module 410 and/or the data transmission module 412 may be implemented with (or cooperate with) the at least one processor 402 to perform at least some of the functions and operations described in more detail herein. In this regard, the EFB module 410 and/or the data transmission module 412 may be realized as suitably written processing logic, application program code, or the like.

Since the mirror FMS and FMS are identical, if any processing is successful within the mirror FMS, there is high confidence the FMS will not be corrupted or exposed to an input resulting in a fault within the FMS during its processing. In order to accurately perform the correct validation of an input within the mirror FMS, the mirror FMS must also share the same starting conditions as the FMS. Since the FMS and mirror FMS are disconnected, the validation of the input on the mirror FMS is only as good as its initial data that was provided by the user. For example, if the aircraft is in flight, the mirror FMS must have access to all of the in-flight data available to the FMS, including such things as current aircraft conditions, current flight plan within the FMS, etc.

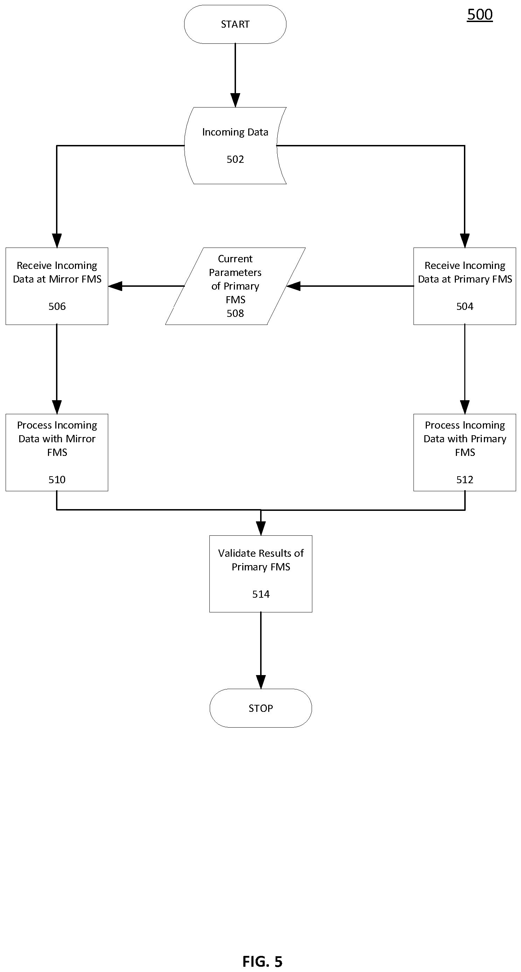

Turning now to FIG. 5, a flowchart 500 is shown of a method for offboard data validation via synced mirror FMS in accordance with the disclosed embodiments. First, a first instance of incoming data 502 is received with a primary FMS 504 located onboard the aircraft while a second instance of incoming data 502 is simultaneously received with a mirror FMS 506 that is identical to the primary FMS. The current parameters and conditions of the primary FMS 508 are automatically transmitted to the mirror FMS. Next, the incoming data is processed with both the primary FMS 512 and the mirror FMS 510. The results of the processed data of the primary FMS are then validated 514 with the results of the processed data of the mirror FMS.

In order to accurately perform the correct validation of the incoming data input with the mirror FMS, the mirror FMS must share the same starting conditions as the primary FMS. Since both FMS's are disconnected, the validation of the data input by the mirror FMS is only as good as the initial data (*i.e.,* "current parameters and conditions") provided to the mirror FMS. For example, if the aircraft is in flight, the mirror FMS must have access to the all the in-flight data available to the primary FMS, including such things as current aircraft conditions, current flight plan within the primary FMS, etc.

In present embodiments, the primary FMS will automatically broadcast defining data to the mirror FMS. Since the primary FMS is simply broadcasting its current parameters and conditions to be used as defining data to the mirror FMS, the integrity of the primary FMS is maintained. The mirror FMS can now provide a much better validation of the input since the mirror FMS will contain the same starting data as the primary FMS. In this way, the user is no longer directly responsible to provide the defining data for the mirror FMS in such a way that it correctly mimics the defining data of the primary FMS. Instead, the mirror FMS simply receives the primary FMS broadcast defining data needed to perform validation of the input. This has the advantage of providing a much more robust validation.

Those of skill in the art will appreciate that the various illustrative logical blocks, modules, circuits, and algorithm steps described in connection with the embodiments disclosed herein may be implemented as electronic hardware, computer software, or combinations of both. Some of the embodiments and implementations are described above in terms of functional and/or logical block components (or modules) and various processing steps. However, it should be appreciated that such block components (or modules) may be realized by any number of hardware, software, and/or firmware components configured to perform the specified functions. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention. For example, an embodiment of a system or a component may employ various integrated circuit components, e.g., memory elements, digital signal processing elements, logic elements, look-up tables, or the like, which may carry out a variety of functions under the control of one or more microprocessors or other control devices. In addition, those skilled in the art will appreciate that embodiments described herein are merely exemplary implementations.

The various illustrative logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such that the processor can read information from, and write information to, the storage medium. In the alternative, the storage medium may be integral to the processor. The processor and the storage medium may reside in an ASIC.

Techniques and technologies may be described herein in terms of functional and/or logical block components, and with reference to symbolic representations of operations, processing tasks, and functions that may be performed by various computing components or devices. Such operations, tasks, and functions are sometimes referred to as being computer-executed, computerized, software-implemented, or computer-implemented. In practice, one or more processor devices can carry out the described operations, tasks, and functions by manipulating electrical signals representing data bits at memory locations in the system memory, as well as other processing of signals. The memory locations where data bits are maintained are physical locations that have particular electrical, magnetic, optical, or organic properties corresponding to the data bits. It should be appreciated that the various block components shown in the figures may be realized by any number of hardware, software, and/or firmware components configured to perform the specified functions. For example, an embodiment of a system or a component may employ various integrated circuit components, e.g., memory elements, digital signal processing elements, logic elements, look-up tables, or the like, which may carry out a variety of functions under the control of one or more microprocessors or other control devices.

When implemented in software or firmware, various elements of the systems described herein are essentially the code segments or instructions that perform the various tasks. The program or code segments can be stored in a processor-readable medium or transmitted by a computer data signal embodied in a carrier wave over a transmission medium or communication path. The "computer-readable medium", "processor-readable medium", or "machine-readable medium" may include any medium that can store or transfer information. Examples of the processor-readable medium include an electronic circuit, a semiconductor memory device, a ROM, a flash memory, an erasable ROM (EROM), a floppy diskette, a CD-ROM, an optical disk, a hard disk, a fiber optic medium, a radio frequency (RF) link, or the like. The computer data signal may include any signal that can propagate over a transmission medium such as electronic network channels, optical fibers, air, electromagnetic paths, or RF links. The code segments may be downloaded via computer networks such as the Internet, an intranet, a LAN, or the like.

Some of the functional units described in this specification have been referred to as "modules" in order to more particularly emphasize their implementation independence. For example, functionality referred to herein as a module may be implemented wholly, or partially, as a hardware circuit comprising custom VLSI circuits or gate arrays, off-the-shelf semiconductors such as logic chips, transistors, or other discrete components. A module may also be implemented in programmable hardware devices such as field programmable gate arrays, programmable array logic, programmable logic devices, or the like. Modules may also be implemented in software for execution by various types of processors. An identified module of executable code may, for instance, comprise one or more physical or logical modules of computer instructions that may, for instance, be organized as an object, procedure, or function. Nevertheless, the executables of an identified module need not be physically located together, but may comprise disparate instructions stored in different locations that, when joined logically together, comprise the module and achieve the stated purpose for the module. Indeed, a module of executable code may be a single instruction, or many instructions, and may even be distributed over several different code segments, among different programs, and across several memory devices. Similarly, operational data may be embodied in any suitable form and organized within any suitable type of data structure. The operational data may be collected as a single data set, or may be distributed over different locations including over different storage devices, and may exist, at least partially, merely as electronic signals on a system or network.

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. The process steps may be interchanged in any order without departing from the scope of the invention as long as such an interchange does not contradict the claim language and is not logically nonsensical.

Furthermore, depending on the context, words such as "connect" or "coupled to" used in describing a relationship between different elements do not imply that a direct physical connection must be made between these elements. For example, two elements may be connected to each other physically, electronically, logically, or in any other manner, through one or more additional elements.

As used herein, the term "axial" refers to a direction that is generally parallel to or coincident with an axis of rotation, axis of symmetry, or centerline of a component or components. For example, in a cylinder or disc with a centerline and generally circular ends or opposing faces, the "axial" direction may refer to the direction that generally extends in parallel to the centerline between the opposite ends or faces. In certain instances, the term "axial" may be utilized with respect to components that are not cylindrical (or otherwise radially symmetric). For example, the "axial" direction for a rectangular housing containing a rotating shaft may be viewed as a direction that is generally parallel to or coincident with the rotational axis of the shaft. Furthermore, the term "radially" as used herein may refer to a direction or a relationship of components with respect to a line extending outward from a shared centerline, axis, or similar reference, for example in a plane of a cylinder or disc that is perpendicular to the centerline or axis. In certain instances, components may be viewed as "radially" aligned even though one or both of the components may not be cylindrical (or otherwise radially symmetric). Furthermore, the terms "axial" and "radial" (and any derivatives) may encompass directional relationships that are other than precisely aligned with (e.g., oblique to) the true axial and radial dimensions, provided the relationship is predominantly in the respective nominal axial or radial direction. As used herein, the term "substantially" denotes within 5% to account for manufacturing tolerances. Also, as used herein, the term "about" denotes within 5% to account for manufacturing tolerances.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A method for validating data for a Flight Management System (FMS) onboard an aircraft, comprising:
receiving a first instance incoming data with a primary FMS located onboard the aircraft;
receiving a second instance incoming data simultaneously with a mirror FMS that is identical to the primary FMS, where the primary FMS and the mirror FMS are not connected;
automatically transmitting the current parameters and conditions of the primary FMS to the mirror FMS;
processing the first instance of incoming data with the primary FMS;
processing the second instance of incoming data with the mirror FMS; and
validating results of the processed data of the primary FMS with the results of the processed data of the mirror FMS.

2. The method of Claim 1, where:
processing the first instance of incoming data with the primary FMS uses software associated with the primary FMS that is stored, maintained, and executed using at least one processor and system memory of the primary FMS; and
processing the second instance of incoming data with the mirror FMS uses a duplicate of software associated with the primary FMS that is stored, maintained, and executed using at least one processor and system memory of the mirror FMS.

3. The method of Claim 2, where:
processing the second instance of incoming data with the mirror FMS results in a simulation of processing of the first instance of incoming data with the primary FMS.

4. The method of Claim 1, further comprising:
retaining the first instance of the incoming data in a data buffer that is part of the primary FMS, after simultaneously receiving the incoming data by the primary FMS and the mirror FMS and during processing of the second instance of the incoming data by the mirror FMS.

5. The method of Claim 4, further comprising:
extracting the first instance of the incoming data from the data buffer to process the first instance of the incoming data with the primary FMS when an output from the mirror FMS comprises the validated results of the processed data.

6. The method of Claim 5, further comprising:
presenting the validated results of the processed data to a user via a display device communicatively coupled to the mirror FMS.

7. The method of Claim 6, further comprising:
receiving a first user input verifying the validated results of the processed data via a first user interface communicatively coupled to the mirror FMS;
receiving a second user input permitting the incoming data for use by the primary FMS via a second user interface communicatively coupled to the FMS; and
extracting the first instance of the incoming data from the data buffer by the primary FMS in response to the second user input.

8. The method of Claim 1, further comprising:
establishing a wireless communication connection between the FMS and the mirror FMS; and
where the incoming data is received simultaneously by the FMS and the mirror FMS via the wireless communication connection.

9. The method of Claim 1, further comprising:
establishing a hardwired communication connection between the FMS and the mirror FMS; and
where the incoming data is received simultaneously by the FMS and the mirror FMS via the wireless communication connection.
